# EUROPÄISCHE PATENTSCHRIFT

(11) **EP 0 638 515 B1**
(45) Veröffentlichungstag und Bekanntmachung des Hinweises auf die Patenterteilung: **05.04.2000**
(21) Anmeldenummer: 94111966.1
(22) Anmeldetag: 01.08.1994
(51) Int. Cl.: C01B 17/90, C01C 1/242, C22B 34/12, C01G 23/053

(54) **Verfahren zur Aufarbeitung von Dünnsäure**
Process for upgrading of diluted acid
Procédé pour valorisation d'acide dilué

(30) Priorität: 12.08.1993 DE 4327025
(43) Veröffentlichungstag der Anmeldung: 15.02.1995
(73) Patentinhaber: Kerr-McGee Pigments GmbH & Co. KG, 47829 Krefeld (DE)
(72) Erfinder: De Cleyn, Rene, Dr., B-2930 Brasschaat (BE); Quaeyhaegens, Frank, Dr., B-2640 Mortsel (BE); Sluyts, Domien, B-2490 Hoevenen (BE)
(74) Vertreter: Hansen, Bernd, Dr. Dipl.-Chem.

(56) Entgegenhaltungen:
- EP-A- 0 207 403
- EP-A- 0 541 002
- DE-A- 3 115 937
- DE-A- 3 123 361
- FR-A- 2 683 217
- US-A- 3 016 286
- US-A- 4 207 295
- DATABASE WPI Section Ch, Week 7704, Derwent Publications Ltd., London, GB; Class C04, AN 77-06339Y TOYO SODA 'Treatment of ammonium ferrous sulphate containing heavy metals - to recover red iron oxide and ammonium sulphate.' & JP-A-51 141 798 (TOYO SODA) 7. Dezember 1976
- DATABASE WPI Derwent Publications Ltd., London, GB; AN 83-22106K 'Production of ammonium sulphate from sulphate wastes.' & SU-A-923 949 (POLYMER PRODN. COMBI.) 31. Mai 1982
- JOURNAL OF INORGANIC & NUCLEAR CHEMISTRY, Bd.40, Nr.8, August 1978, PERGAMON (GB) Seiten 1571 - 1574 T. SATO ET AL. 'The kinetics of aluminium(III) extraction from sulphuric acid solutions by di-(2-ethylhexyl)-phosphoric acid.'
- CHEMICAL ABSTRACTS, vol. 115, no. 18, 4. November 1991, Columbus, Ohio, US; abstract no. 189187y, X. HOU 'Process for recovery of chromium from wastewater from electrochroming plants effluents.' Seite 382 ; & CN-A-1 050 709 17. April 1991

## Beschreibung

Die Erfindung betrifft ein Verfahren zur Aufarbeitung von Dünnsäure aus der Titandioxidproduktion nach dem Sulfatverfahren.

Bei der Titandioxidproduktion nach dem Sulfatverfahren fällt Dünnsäure an, die derzeit nach einer mehrstufigen Aufkonzentrierung rezykliert wird.

In US 3 016 286 wird Dünnsäure aus der Titandioxidproduktion mit Ammoniak bei erhöhter Temperatur bis zu einem pH-Wert von ca. 6 versetzt. Der entstandene Feststoff (TiO(OH)₂, VO(OH)₂, Al(OH)₃, Cr(OH)₃) wird abfiltriert. Das Filtrat wird bei pH 7 bis 8 mit Luft oxidiert, wobei sich Eisen-Pigment bildet, das ebenfalls abfiltriert wird. Das Filtrat enthält jedoch noch geringe Mengen an Verunreinigungen, wobei insbesondere Magnesium und Mangan bei der Eindampfung des Filtrates zur Erzeugung von Ammoniumsulfat störend wirken.

In JP-A-45036216 wird Dünnsäure (Abfallsäure) mit Ammoniak unter Zugabe von Magnetitkeimen neutralisiert, um Eisen zu fällen. Restmengen an Eisen werden nach Oxidation mit Luft entfernt. Die erhaltene Lösung ist verunreinigt, so daß eine technische Eindampfung zu Ammoniumsulfat kaum möglich ist. Zudem wäre das Ammoniumsulfat ebenfalls stark verunreinigt.

In DE 2 443 942 werden Eisenionen aus sauren Abwässern durch Oxidation und Fällung entfernt, indem ein Luft-Ammoniak-Gemisch dem Abwasser zugeführt wird. Die Problematik anderer Metallionen, die üblicherweise in der Dünnsäure vorhanden sind, wird hier nicht angesprochen.

Aus Derwent Abstract WPI, AN: 77-06339Y (JP-A 51 14 17 98) ist ein Verfahren zum Extrahieren von Chrom-, Nickel- und Manganionen aus wäßriger Ammoniumsulfat-Lösung in ein organisches Lösemittel bekannt.

In DE 3 115 937 werden Kationen aus der Dünnsäure durch stufenweise Erhöhung des pH-Wertes durch Ammoniakzugabe entfernt. Die erhaltene Lösung kann danach eingedampft werden. Diese Eindampfung ist jedoch nur unter großen Schwierigkeiten zu bewältigen und das erhaltene Ammoniumsulfat ist mit Magnesium verunreinigt, was eine Lagerung des Ammoniumsulfates z.B. nicht gestattet.

Aufgabe war es daher, ein Verfahren zur Verfügung zu stellen, daß es gestattet, Dünnsäure aus der Titandioxidproduktion effektiv aufzuarbeiten, d.h. insbesondere einfach und kostengünstig, wobei die in der Dünnsäure vorliegenden Wertstoffe in eine geeignete, nutzbare Form überführt werden, so daß sie weiterverwendet werden können.

Diese Aufgabe konnte durch das erfindungsgemäße Verfahren gelöst werden, bei dem das in der Dünnsäure vorliegende Sulfat in technisch reines Ammoniumsulfat überführt wird, das als Düngemittel eingesetzt werden kann.

Gegenstand der Erfindung ist ein kontinuierliches Verfahren zur Aufarbeitung von Dünnsäure aus der Titandioxidproduktion nach dem Sulfatverfahren, welches dadurch gekennzeichnet ist, daß
a) die Dünnsäure in einer ersten Stufe mit Ammoniak auf pH-Werte von 4 bis 6 bei Temperaturen oberhalb von 50°C bis zum Siedepunkt der Lösung, vorzugsweise von 70°C bis 110°C, teilneutralisiert wird,
b) die gebildeten schwerlöslichen Verbindungen der Metalle Titan, Vanadium, Chrom, Aluminium und teilweise Eisen aus a) abfiltriert werden und der Filterkuchen gegebenenfalls gewaschen und weiter aufgearbeitet wird,
c) das Filtrat und gegebenenfalls das Waschwasser aus b) mit Ammoniak auf pH-Werte von ca. 7 neutralisiert werden und gleichzeitig mit Luft/Sauerstoff oxidiert wird,
d) die gebildeten schwerlöslichen Verbindungen der Metalle Eisen und teilweise Mangan aus c) abfiltriert werden und der Filterkuchen gegebenenfalls gewaschen und weiter aufgearbeitet wird,
e) das Filtrat und gegebenenfalls das Waschwasser aus d) zur Entfernung von Magnesium und Mangan einer Reaktivextraktion bei Temperaturen von 60 bis 95°C, vorzugsweise von 70 bis 90°C, unterworfen werden, indem
   e₁) ein Ammoniumsalz eines Phosphorsäurederivates oder eines Phosphonsäurederivates in einer organischen Lösung mit dem Filtrat im Gegenstrom in Kontakt gebracht wird, wobei die Ammoniumionen in das Filtrat und die Magnesium- und Mangan-Ionen in die organische Lösung wandern,
   e₂) die organische Lösung durch Zugabe von wäßriger Schwefelsäurelösung von Magnesium und Mangan befreit wird unter Bildung von schwefelsaurer, wäßriger, magnesiumsulfathaltiger, mangansulfathaltiger Lösung,
   e₃) die organische Lösung aus e₂) mit Ammoniumhydroxid versetzt wird und in e₁) wieder eingesetzt wird,
f) nach Entfernung von Magnesium und Mangan die wäßrige Ammoniumsulfatlösung aus e) gegebenenfalls einer Verdampfungskristallisation zur Bildung von festem Ammoniumsulfat unterworfen wird.

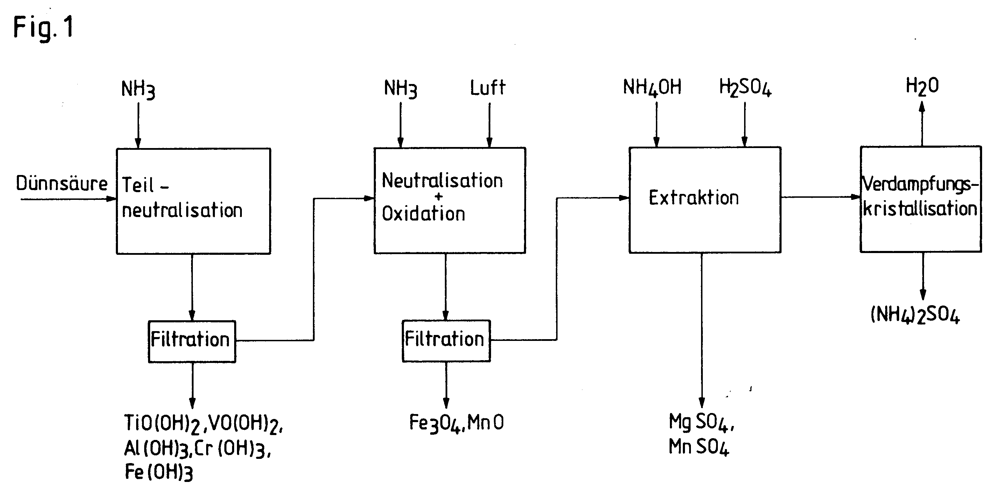

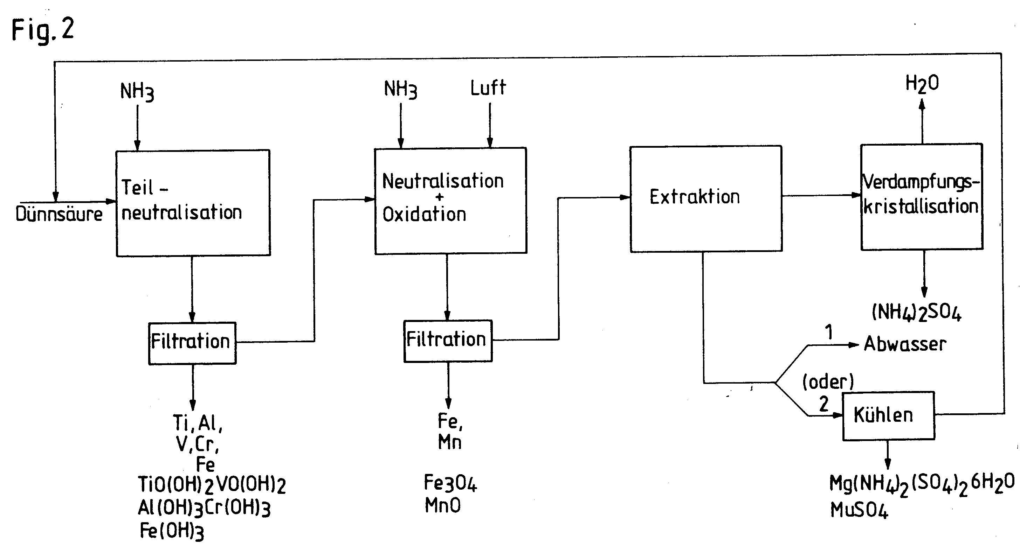

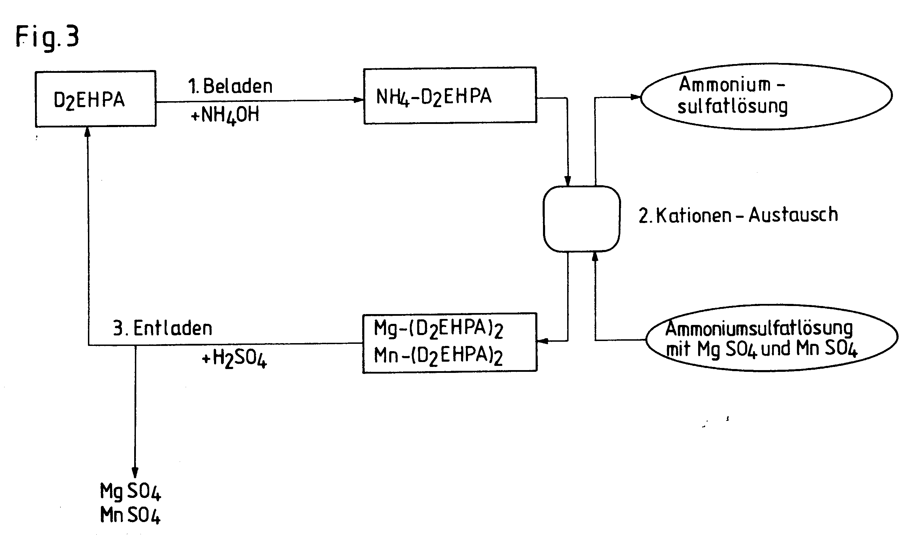

Die Verfahrensvarianten sind als Schema in den Figuren 1 und 2 sowie 3 wiedergegeben.

Der Filterkuchen aus dem Reaktionsschritt b) wird weiter gemäß dem Verfahren des Anspruchs 1 aufgearbeitet, indem
b₁) der Filterkuchen mit Luft/Sauerstoff oxidiert wird, gleichzeitig Natronlauge zugegeben und auf Temperaturen oberhalb 100°C aufgeheizt wird, wobei der pH-Wert auf >12 gehalten wird,
b₂) die gebildeten schwerlöslichen Verbindungen der Metalle Titan und Eisen aus b₁) abfiltriert werden,
b₃) das Filtrat aus b₂), welches die löslichen Verbindungen der Metalle Aluminium, Vanadium und Chrom enthält, unter Zugabe von Keimen abgekühlt oder mit CO₂ auf pH7 neutralisiert wird,
b₄) die gebildeten schwerlöslichen Verbindungen von Aluminium aus b₃) abfiltriert werden,
b₅) das Filtrat aus b₄) gegebenenfalls mit Schwefelsäure auf einen pH-Wert von ca. 2 eingestellt wird,
b₆) die gebildeten schwerlöslichen Verbindungen von Vanadium aus b₅) abfiltriert werden und
b₇) aus dem Filtrat aus b₆) das Chrom durch Zugabe von Natriumsulfit und Natriumcarbonat als Chromhydroxid bei pH 5-6 gefällt wird.

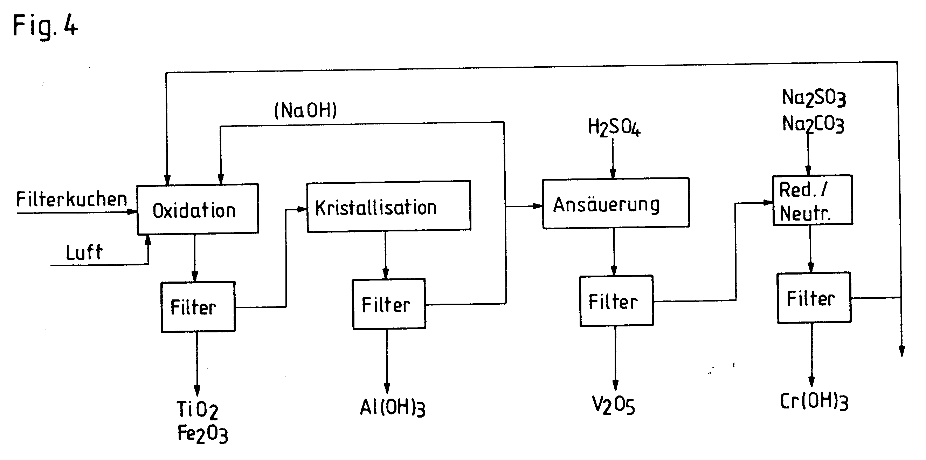

Die Aufarbeitung des Filterkuchens aus b) ist in Figur 4 dargestellt.

Die bei der Flüssig-flüssig-Extraktion anfallende schwefelsaure, wäßrige, magnesiumhaltige und manganhaltige Lösung wird vorzugsweise gekühlt und das gebildete Magnesiumammoniumsulfat/Mangansulfat abgetrennt.

Anstelle der Extraktion könnte principiell auch eine Kühlkristallisation zur Entfernung von Magnesium und Mangan aus dem Filtrat und gegebenenfalls dem Waschwasser aus der Reaktionsstufe d) des erfindungsgemäßen Verfahrens durchgeführt werden, allerdings hat diese Kühlkristallisation etliche Nachteile (z.B. weniger sauberes Ammoniumsulfat als Produkt, hoher Aufwand).

Die Erfindung soll anhand der nachfolgenden Beispiele näher erläutert werden.

### Beispiele

### Beispiel 1

### A. Neutralisation mit NH₃ und Luft-Oxidation (erfindungsgemäß)

1 000 kg Dünnsäure (Zusammensetzung: s. Tabelle 1) werden bei 70° bis 80°C kontinuierlich mit 99,95 kg NH₃ auf pH 5,0 neutralisiert. Dabei entstehen 19,14 kg Niederschlag (36,31 % TiO(OH)₂, 54,37 % Al(OH)₃, 6,21 % VO(OH)₂ und 3,11 % Cr(OH)₃) (siehe Tabelle 1; Feststoff 1) und nach Filtration bleiben 1 080,81 kg Lösung (35,92 % (NH₄)₂SO₄, 4,15 % FeSO₄, 0,08 % MnSO₄, 3,25 % MgSO₄, 0,22 % CaSO₄ und 56,37 % H₂O) zurück (siehe Tabelle 1; Filtrat 1).

Die klare Flüssigkeit wird in einer zweiten Stufe mit ca. 40 m³ Luft oxidiert und während der Oxidation mit 10,16 kg NH₃ auf pH 7,0 gehalten. Unter diesen Bedingungen bilden sich 22,8 kg Fe₃O₄ (Magnetit) (Tabelle 1; Feststoff 2) und nach Filtration bleiben 1 069,74 kg Ammoniumsulfat-Lösung (39,98 % (NH₄)₂SO₄, 3,29 % MgSO₄, 0,08 % MnSO₄, 0,22 % CaSO₄ und 56,43 % H₂O) zurück (Tabelle 1; Filtrat 2).

### B1. Eindampfung nach dem Stand der Technik

Bei einer direkten Eindampfung der oben angefallenen Lösung kristallisieren 427,72 kg Ammoniumsulfat aus, verunreinigt mit Mg(NH₄)₂(SO₄)₂·6H₂O, CaSO₄ und MnSO₄ (s. Tabelle 2). Dieser Feststoff ist nicht als Düngemittel verwertbar, denn z.B. der N-Gehalt (18,24 %) ist zu niedrig (Soll: 21 % N). Das Produkt ist durch den hygroskopischen Charakter des Doppelsalzes nicht rieselfähig und deshalb nicht handhabbar. Außerdem ist die Löslichkeit von Mg(NH₄)₂(SO₄)₂· 6H₂O stark temperaturabhängig, wodurch bei einer späteren Ammonsulfat-Eindampfung in Kristallisationstürmen Anbackungen auftreten würden.

### B2. Extraktion (erfindungsgemäß)

500 kg einer 40 %igen Lösung von Di(2-ethylhexyl)phosphorsäure in Shellsol-K® werden mit 37 kg einer 30 %igen NH₃-Lösung gemischt. Dabei wird das Ammoniumsalz gebildet. Mit dieser Lösung werden 1 000 kg der oben angefallenen Ammoniumsulfat-Lösung (ca. 0,7 % Mg; Ti-, Al-, V-, Cr- und Fe-frei) in 4 Mixer-Settler-Batterien extrahiert (Gegenstrom-Fahrweise). Dabei verbleiben 1 000 kg Ammoniumsulfat-Lösung mit ca. 150 ppm Mg. Alle anderen Metallionen sind quantitativ entfernt.

In der Re-Extraktion wird die organische Phase in 2 zusätzlichen Mixer-Settler-Batterien (Gegenstrom-Fahrweise) mit 121 kg 25 % H₂SO₄ regeneriert. Dabei entsteht 153 kg Raffinat (Zusammensetzung: 22,6 % MgSO₄, 0,63 % MnSO₄ und 0,44 % CaSO₄).

### B3. Eindampfung (erfindungsgemäß)

1 000 kg Ammoniumsulfat-Lösung aus B2. werden stufenweise eingedampft bei 50°C, 75°C und 108°C. Dabei entstehen 454,6 kg Ammoniumsulfat mit 21,13 % N-Gehalt.

### C. Aufarbeitung des Feststoffes aus der Neutralisation (erfindungsgemäß)

### Abtrennung des Titans:

100 kg gewaschener Filterkuchen wird mit 80 kg 25 %iger NaOH über 100°C aufgeheizt und parallel mit Luft oxidiert. Nach Filtration verbleiben 27,2 kg NaTiO₃, das z.B. wieder im Titanaufschluß eingesetzt werden kann. Das Filtrat enthält 65,2 kg NaAlO₂, 8,6 kg NaVO₃ und 5,6 kg Na₂CrO₄.

### Abtrennung des Aluminiums:

Für die Abtrennung des Aluminiums bieten sich zwei Wege an:
a) 100 kg Filtrat (Ti-frei) werden mit CO₂ auf pH 7,0 neutralisiert. Dabei kristallisieren 30 kg Al₂O₃·3H₂O aus.
b) 100 kg Filtrat (Ti-frei) werden unter Rückführung von Hydrargillit-Keimen auf 25°C abgekühlt. Dabei werden 25 kg Al(OH)₃ gebildet.

### Abtrennung des Vanadiums:

70 kg Filtrag (Ti- und Al-frei) werden mit 33 kg H₂SO₄ (80 %) auf pH 2 angesäuert (25°C), wobei 3,2 kg V₂O₅ ausfallen.

### Abtrennung des Chroms:

100 kg Filtrat (Ti-, Al- und V-frei) werden durch Zusatz von 2 kg Na₂SO₃ reduziert, die Lösung wird auf pH 5 teilneutralisiert, und 1,8 kg Cr(OH)₃ werden isoliert.

**Tabelle 1**

| [alle Angaben in Gew.-%] | | | | | |
|---|---|---|---|---|---|
| | Dünnsäure | Feststoff 1 | Filtrat 1 | Feststoff 2 | Filtrat 2 |
| H₂SO₄ | 25,92 | - | - | - | - |
| TiOSO₄ | 1,14 | - | <0,0001 | - | - |
| Al₂(SO₄)₃ | 2,28 | - | <0,0001 | - | - |
| VOSO₄ | 0,19 | - | <0,0001 | - | - |
| Cr₂(SO₄)₃ | 0,11 | - | <0,0001 | - | - |
| FeSO₄ | 4,49 | 0,0010 | 4,15 | - | <0,0010 |
| MnSO₄ | 0,08 | 0,0010 | 0,08 | 2,06 | 0,08 |
| MgSO₄ | 3,52 | 0,0010 | 3,25 | - | 3,29 |
| CaSO₄ | 0,24 | - | 0,22 | - | 0,22 |
| H₂O | 62,03 | - | 56,37 | - | 56,43 |
| (NH₄)₂SO₄ | - | - | 35,92 | - | 39,98 |
| TiO(OH)₂ | - | 36,31 | - | - | - |
| Al(OH)₃ | - | 54,37 | - | - | - |
| VO(OH)₂ | - | 6,21 | - | - | - |
| Cr(OH)₃ | - | 3,11 | - | - | - |
| Fe₃O₄ | - | - | - | 97,94 | - |

**Tabelle 2**

| | Menge [kg] | [%] | [% N] |
|---|---|---|---|
| (NH₄)₂SO₄ | 427,72 | 86,02 | 18,21 |
| MgSO₄ | 35,16 | 7,07 | - |
| CaSO₄ | 2,38 | 0,48 | - |
| MnSO₄ | 0,82 | 0,16 | - |
| H₂O | 31,13 | 6,26 | - |
| Summe | 497,21 | 100 | |

## Patentansprüche

1. Kontinuierliches Verfahren zur Aufarbeitung von Dünnsäure aus der Titandioxidproduktion nach dem Sulfatverfahren, dadurch gekennzeichnet, daß
a) die Dünnsäure in einer ersten Stufe mit Ammoniak auf pH-Werte von 4 bis 6 bei Temperaturen oberhalb von 50°C bis zum Siedepunkt der Lösung, vorzugsweise von 70°C bis 110°C, teilneutralisiert wird,
b) die gebildeten schwerlöslichen Verbindungen der Metalle Titan, Vanadium, Chrom, Aluminium und teilweise Eisen aus a) abfiltriert werden und der Filterkuchen gegebenenfalls gewaschen und weiter aufgearbeitet wird,
indem
b₁) der Filterkuchen mit Luft/Sauerstoff oxidiert wird, gleichzeitig Natronlauge zugegeben und auf Temperaturen oberhalb 100°C aufgeheizt wird, wobei der pH-Wert auf>12 gehalten wird,
b₂) die gebildeten schwerlöslichen Verbindungen der Metalle Titan und Eisen aus b₁) abfiltriert werden,
b₃) das Filtrat aus b₂), welches die löslichen Verbindungen der Metalle Aluminium, Vanadium und Chrom enthält, unter Zugabe von Keimen abgekühlt oder mit CO₂ auf pH 7 neutralisiert wird,
b₄) die gebildeten schwerlöslichen Verbindungen von Aluminium aus b₃) abfiltriert werden,
b₅) das Filtrat aus b₄) gegebenenfalls mit Schwefelsäure auf einen pH-Wert von ca. 2 eingestellt wird,
b₆) die gebildeten schwerlöslichen Verbindungen von Vanadium aus b₅) abfiltriert werden und
b₇) aus dem Filtrat aus b₆) das Chrom durch Zugabe von Natriumsulfit und Natriumcarbonat als Chromhydroxid bei pH 5-6 gefällt wird,
c) das Filtrat und gegebenenfalls das Waschwasser aus b) mit Ammoniak auf pH-Werte von ca. 7 neutralisiert werden und gleichzeitig mit Luft/Sauerstoff oxidiert wird,
d) die gebildeten schwerlöslichen Verbindungen der Metalle Eisen und teilweise Mangan aus c) abfiltriert werden und der Filterkuchen gegebenenfalls gewaschen und weiter aufgearbeitet wird,
e) das Filtrat und gegebenenfalls das Waschwasser aus d) zur Entfernung von Magnesium und Mangan einer Reaktivextraktion bei Temperaturen von 60 bis 95°C, vorzugsweise von 70 bis 90°C, unterworfen werden, indem
e₁) ein Ammoniumsalz eines Phosphorsäurederivates oder eines Phosphonsäurederivates in einer organischen Lösung mit dem Filtrat im Gegenstrom in Kontakt gebracht wird, wobei die Ammoniumionen in das Filtrat und die Magnesium- und Mangan-Ionen in die organische Lösung wandern,
e₂) die organische Lösung durch Zugabe von wäßriger Schwefelsäurelösung von Magnesium und Mangan befreit wird unter Bildung von schwefelsaurer, wäßriger, magnesiumsulfathaltiger, mangansulfathaltiger Lösung,
e₃) die organische Lösung aus e₂) mit Ammoniumhydroxid versetzt wird und in e₁) wieder eingesetzt wird,
f) nach Entfernung von Magnesium und Mangan die wäßrige Ammoniumsulfatlösung aus e) gegebenenfalls einer Verdampfüngskristallisation zur Bildung von festem Ammoniumsulfat unterworfen wird.

2. Verfahren gemäß Anspruch 1, dadurch gekennzeichnet, daß die magnesiumhaltige, manganhaltige Lösung aus e₂) gekühlt wird, so daß das Magnesiumammoniumsulfat/Mangansulfat ausfällt und abgetrennt wird.

## Claims

1. Continuous process for working up thin acid from titanium dioxide production by the sulphate process, characterised in that
a) the thin acid is partly neutralised in a first stage using ammonia to pH values of 4 to 6 at temperatures above 50°C up to the boiling point of the solution, preferably 70°C to 110°C,
b) the compounds of the metals, titanium, vanadium, chromium, aluminium and in some cases iron which are formed and are difficult to dissolve are filtered off from a) and the filter cake is optionally washed and further worked up,
by
b₁) oxidising the filter cake using air/oxygen, at the same time adding sodium hydroxide solution and heating at temperatures above 100°C, wherein the pH value is kept at>12,
b₂) filtering off the compounds of the metals titanium and iron which are formed and are difficult to dissolve from b₁),
b₃) cooling the filtrate from b₂), which contains the soluble compounds of the metals aluminium, vanadium and chromium, by adding seeds or neutralising to pH 7 using CO₂,
b₄) filtering off the compounds of aluminium which are formed and are difficult to dissolve from b₃),
b₅) adjusting the filtrate from b₄) to a pH value of about 2 optionally using sulphuric acid,
b₆) filtering off the compounds of vanadium which are formed and are difficult to dissolve from b₅), and
b₇) precipitating from the filtrate from b₆) the chromium as chromium hydroxide at pH 5-6 by adding sodium sulphite and sodium carbonate,
c) the filtrate and optionally the washing water from b) are neutralised using ammonia to pH values of about 7 and oxidation is carried out at the same time using air/oxygen,
d) the compounds of the metals iron and in some cases manganese which are formed and are difficult to dissolve are filtered off from c) and the filter cake is optionally washed and further worked up,
e) the filtrate and optionally the washing water from d) are subjected to reactive extraction to remove magnesium and manganese at temperatures of 60 to 95°C, preferably 70 to 90°C by
e₁) contacting an ammonium salt of a phosphoric acid derivative or a phosphonic acid derivative in an organic solution in counter-current with the filtrate, wherein the ammonium ions move into the filtrate and the magnesium and manganese ions into the organic solution,
e₂) freeing the organic solution of magnesium and manganese by adding aqueous sulphuric acid solution with formation of sulphurous, aqueous, magnesium sulphate-containing, manganese sulphate-containing solution,
e₃) treating the organic solution from e₂) with ammonium hydroxide and using it again in e₁),
f) after removing magnesium and manganese, the aqueous ammonium sulphate solution from e) is optionally subjected to evaporative crystallisation to form solid ammonium sulphate.

2. Process according to claim 1, characterised in that the magnesium-containing, manganese-containing solution from e₂) is cooled, so that the magnesium-ammonium sulphate/manganese sulphate is precipitated and separated off.

## Revendications

1. Procédé continu de valorisation d'acide dilué, issu de la production du dioxyde de titane selon le procédé au sulfate, caractérisé en ce que
a) l'acide dilué est, dans une première étape, partiellement neutralisé avec de l'ammoniac, à des valeurs de pH de 4 à 6, à des températures supérieures à 50°C jusqu'au point d'ébullition de la solution, de préférence de 70°C à 110°C,
b) les composés difficilement solubles, constitués, des métaux que sont le titane, le vanadium, le chrome, l'aluminium et, partiellement, le fer issus de a), sont éliminés par filtration et le gâteau de filtrage est, le cas échéant, lavé et soumis à une revalorisation supplémentaire,
en
b₁) oxydant le gâteau de filtrage avec de l'air/oxygène, en ajoutant simultanément de la soude caustique et en chauffant à des températures supérieures à 100°C, la valeur du pH étant maintenue > 12,
b₂) éliminant par filtrage les composés difficilement solubles constitués des métaux que sont le titane et le fer, issus de b₁),
b₃) refroidissant le filtrat issu de b₂, qui contient les composés solubles des métaux que sont l'aluminium, le vanadium et le chrome, avec addition de germes, ou en neutralisant à pH 7 avec du CO₂,
b₄) éliminant par filtration les composés d'aluminium constitués en b₃) difficilement solubles,
b₅) réglant à une valeur de pH d'environ 2 le filtrat issu de b₄), le cas échéant avec de l'acide sulfurique,
b₆) éliminant par filtrage les composés de vanadium constitués en b₅, difficilement solubles, et
b₇) précipitant le chrome, à partir du filtrat issu de b₆), par addition de sulfite de sodium et de carbonate de sodium, sous la forme d'hydroxyde de chrome, à pH 5-6,
c) neutralisant le filtrat et, le cas échéant, l'eau de lavage issue de b) avec de l'ammoniac, à des valeurs de pH d'environ 7, et en oxydant simultanément avec de l'air/oxygène,
d) éliminant par filtrage les composés difficilement solubles dans l'eau, constitués, des métaux que sont le fer et partiellement le manganèse issus de c), et en lavant le gâteau de filtrage le cas échéant, et en procédant à une valorisation supplémentaire,
e) soumettant le filtrat, et le cas échéant l'eau de lavage issue de d), pour éliminer le magnésium et le manganèse, a une extraction réactive à des températures de 60 à 95°C, de préférence de 70 à 90°C, en
e₁) mettant en contact, en contre-courant, un sel d'ammonium d'un dérivé d'acide phosphorique ou d'un dérivé d'acide phosphonique dans une solution organique avec le filtrat, les ions aluminium migrant dans le filtrat et les ions magnésium et manganèse migrant dans la solution organique,
e₂) débarrassant la solution organique du magnésium et du manganèse par addition de solution aqueuse d'acide sulfurique, en formant une solution soufrée acide, aqueuse, contenant du sulfate de manganèse et du sulfate de magnésium,
e₃) mélangeant la solution organique issue de e₂) avec de l'hydroxyde d'ammonium et en la réinsérant dans e₁),
f) soumettant la solution de sulfate aqueuse de magnésium issue de e), après élimination du magnésium et du manganèse, le cas échéant, à une cristallisation par évaporation dans le but de former du sulfate d'ammonium solide.

2. Procédé selon la revendication 1, caractérisé en ce que la solution contenant du magnésium et du manganèse, issue de e₂) est refroidie de manière que le sulfate d'ammonium-magnésium/sulfate de manganèse précipite et soit séparé.
